# EUROPEAN PATENT APPLICATION

(11) **EP 4 848 352 A1**
(43) Date of publication of application: **02.12.2026**
(21) Application number: 26178747.7
(22) Date of filing: 14.05.2026
(51) Int. Cl.: H01M 4/13, H01M 4/04, H01M 4/139

(54) **ELECTRODE AND METHOD OF FABRICATING THE SAME**

(30) Priority: 26.05.2025 KR 20250067997
(71) Applicant: SAMSUNG SDI CO., LTD., Yongin-si, Gyeonggi-do 17084 (KR)
(72) Inventor: JEONG, Deokhoon, 17084 Yongin-si (KR); KIM, Minsic, 17084 Yongin-si (KR); JO, Jaeho, 17084 Yongin-si (KR); JUNG, Sungmin, 17084 Yongin-si (KR)
(74) Representative: Marks & Clerk LLP

(57) **Abstract**

An electrode and a method of fabricating the same are described. The electrode includes an electrode base, a primer layer provided on a surface of the electrode base, a thermoplastic coating portion provided on a side surface of the primer layer and positioned on the surface of the electrode base, an electrode composite portion provided on a surface of the primer layer, an insulating coating layer provided on a side surface of the electrode composite portion and provided on a surface of the thermoplastic coating portion.

## Description

### BACKGROUND

### Field

The disclosure relates to an electrode and a method of fabricating the same.

### Description of the Related Art

Rapid increases in fossil fuel consumption have led to a heightened demand for alternative and clean energy sources, and in this context, the field of power generation and energy storage using electrochemistry is most actively researched. Currently, a representative example of electrochemical devices using such electrochemical energy may be secondary batteries, which are used in an increasingly wide range of applications.

Lithium secondary batteries are representative among these secondary batteries, and the fabrication process for lithium secondary batteries is broadly divided into three processes of electrode fabrication, electrode assembly fabrication, and formation. Here, the electrode fabrication process may include electrode compounding, electrode coating, drying, calendering, slitting, and winding, in which as post-processing, a dry electrode film may be adhered to a current collector before an insulating material is applied to side peripheral portions of the dry electrode film.

In cases where an insulating material is applied to side peripheral portions of a conventional dry electrode film, top edge portions adjacent to the side edges of the dry electrode film may also be coated with the insulating material, thereby forming protrusions, i.e., a phenomenon referred to as "beading."

### SUMMARY

The disclosure is intended to provide an electrode fabrication method which prevents the formation of a protruding insulating material on the top surface of an electrode composite portion by placing thermoplastic coating portions together with a primer layer, melting the thermoplastic coating portions, and subsequently forming an insulating coating layer, thereby preventing an increase in the thickness of an electrode and the fracture of the electrode during a rolling process, and an electrode fabricated thereby.

According to embodiments of the disclosure, provided is an electrode including: an electrode base; a primer layer provided on a surface of the electrode base; a thermoplastic coating portion provided on a side surface of the primer layer and positioned on the surface of the electrode base; an electrode composite portion provided on a surface of the primer layer; an insulating coating layer provided on a side surface of the electrode composite portion and provided on a surface of the thermoplastic coating portion.

In the electrode, the width of the thermoplastic coating portion in the width direction of the electrode base may be equal to or less than the width of the insulating coating layer in the width direction of the electrode base.

In the electrode, the thickness of the thermoplastic coating portion in the height direction of the electrode base may be equal to or less than the thickness of the primer layer in the height direction of the electrode base.

In the electrode, the thermoplastic coating portion may include one of polyamide, polyimide, and/or polyethylene.

In the electrode, the electrode composite portion may include a dry electrode film laminated on the surface of the primer layer.

In the electrode, the side surface of the electrode composite portion may be inclined relative to the surface of the primer layer.

In the electrode, the insulating coating layer may be formed by applying insulating powder to the molten thermoplastic coating portion and melting the applied insulating powder.

In the electrode, the insulating powder may be sprayed and applied to the molten thermoplastic coating portion by one of spray nozzle spraying, dispenser spraying, and/or electrostatic spraying.

In the electrode, the insulating powder may be sprayed in a direction inclined relative to the surface of the thermoplastic coating portion.

In the electrode, the primer layer may include a conductive layer including a carbon material.

According to embodiments of the disclosure, provided is method of fabricating an electrode, the method including: providing a primer layer and a thermoplastic coating portion on an electrode base; providing an electrode composite portion on the primer layer; melting the thermoplastic coating portion; and forming an insulating coating layer on the molten thermoplastic coating portion.

In the method, the primer layer may include a conductive layer including a carbon material.

In the method, the thermoplastic coating portion may include one of polyamide, polyimide, and/or polyethylene.

In the method, a side surface of the electrode composite portion may be inclined relative to a surface of the primer layer.

In the method, the melting of the thermoplastic coating portion may comprise melting the thermoplastic coating portion to a preset temperature.

In the method, the forming of the insulating coating layer may include: applying an insulating powder to the molten thermoplastic coating portion; and melting the molten insulating powder.

In the method, applying the insulating powder may comprise spraying the insulating powder by one of spray nozzle spraying, dispenser spraying, and/or electrostatic spraying.

In the method, spraying the insulating powder may comprise spraying the insulating powder in a direction inclined relative to a surface of the molten thermoplastic coating portion.

In the method, the forming of the insulating coating layer may include removing residual powder from the insulating coating layer.

In the method, removing the residual powder may comprise removing the residual powder by compressed air blowing or vacuum suction.

At least some of the above and other features of the invention are set out in the claims.

### BRIEF DESCRIPTION OF THE DRAWINGS

These and/or other aspects will become apparent and more readily appreciated from the following description of the embodiments, taken in conjunction with the accompanying drawings in which:
FIG. 1 is a cross-sectional view schematically illustrating an electrode according to embodiments of the disclosure;
FIG. 2A to 2C illustrates views illustrating the entire processes before formation of an insulating coating layer in a fabrication process of an electrode according to embodiments of the disclosure;
FIG. 3A to 3C illustrates views illustrating a process of forming an insulating coating layer according to embodiments of the disclosure;
FIG. 4 is a view illustrating another embodiment for spraying insulating powder according to embodiments of the disclosure;
FIG. 5 is a view illustrating a process of removing residual powder according to embodiments of the disclosure;
FIG. 6 is a cross-sectional view schematically illustrating an electrode according to another embodiment of the disclosure;
FIG. 7 is a flowchart illustrating a method of fabricating an electrode according to embodiments of the disclosure; and
FIG. 8 is a flowchart illustrating the method of forming the insulating coating layer shown in FIG. 7 according to embodiments of the disclosure.

### DETAILED DESCRIPTION

The terms "module" and "unit" used herein to describe elements are assigned solely for the convenience of drafting the specification and do not imply any particular significance or role. Therefore, these terms "module" and "unit" may be used interchangeably.

The ordinal terms "first," "second," etc. may be used herein to describe various elements, but these elements should not be limited by these terms. These terms are used only to distinguish one element from another.

The terms "comprise," "include," "have," etc., as used herein, indicate that a feature, a number, a step, an operation, a component, a part or a combination thereof described in the disclosure is present, but do not preclude the possibility of the presence or addition of one or more other features, numbers, steps, operations, components, parts or combinations thereof in advance.

The inventors have recognized that the formation of protrusions in the process of coating an electrode with insulating material causes a problem in that the thickness of the electrode is increased by the thickness of the insulating material coating the top surface of the dry electrode film. Furthermore, during the calendering process, the insulating material coating the dry electrode film acted as a protrusion, thereby causing the dry electrode film to fracture during calendering.

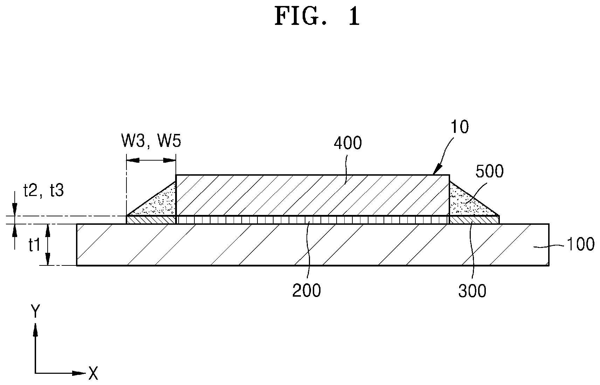

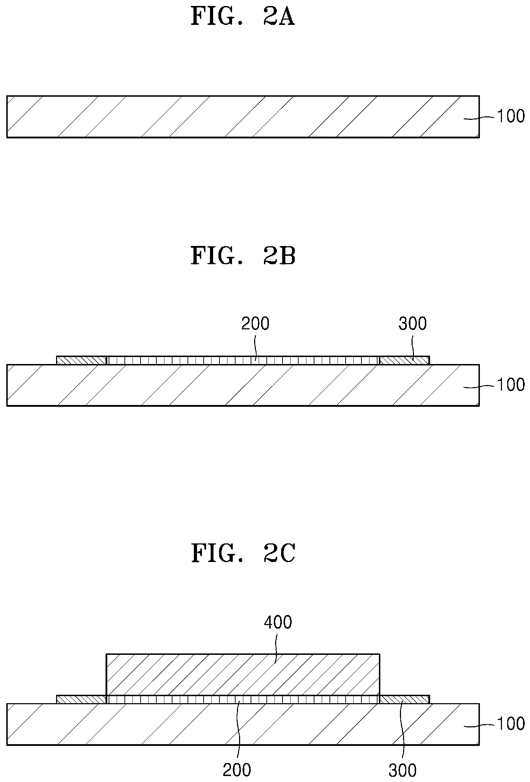

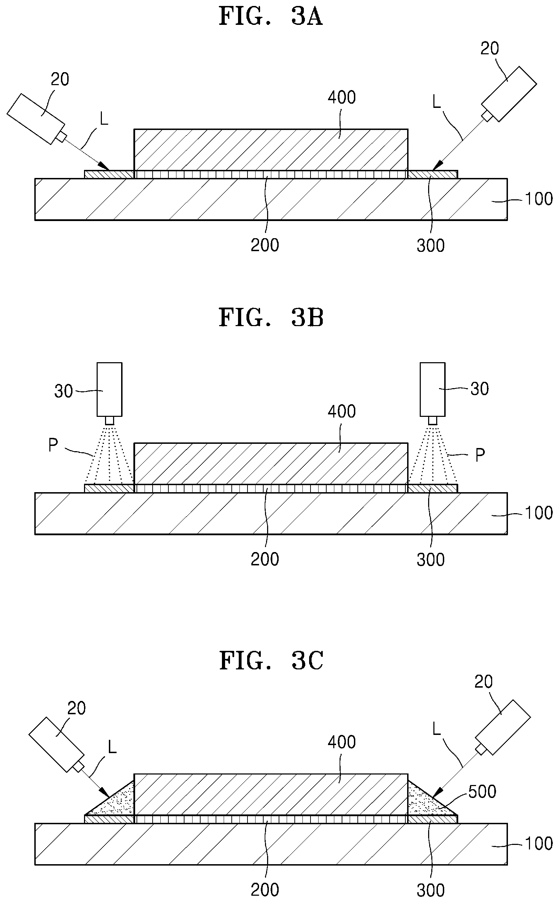

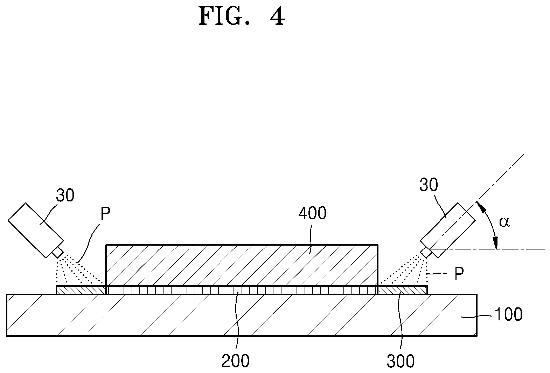

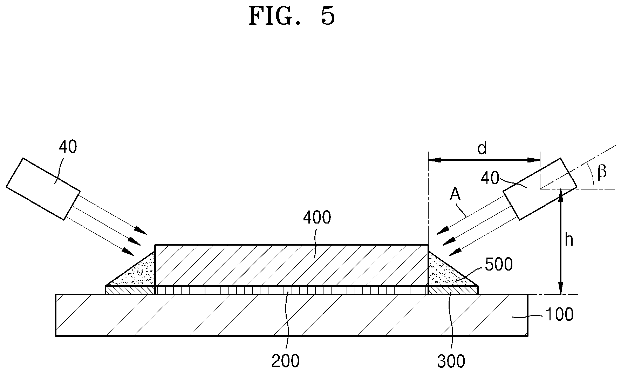

FIG. 1 is a cross-sectional view schematically illustrating an electrode according to embodiments of the disclosure. FIG. 2A to 2C illustrates views illustrating the entire processes before formation of an insulating coating layer in a fabrication process of an electrode according to embodiments of the disclosure. FIG. 3A to 3C illustrates views illustrating a process of forming an insulating coating layer. FIG. 4 is a view illustrating another embodiment for spraying insulating powder. FIG. 5 is a view illustrating a process of removing residual powder.

Referring to FIG. 1 and FIG. 2A, an electrode 10 according to embodiments of the disclosure includes an electrode base 100, a primer layer 200, thermoplastic coating portions 300, an electrode composite portion 400, and an insulating coating layer 500.

The electrode base 100 may be an electrode substrate while serving as a current collector, and may provide a support base for an active material layer to collect current and transmit and distribute the current to an external circuit.

For example, the electrode base 100 may collect electrons generated from an active material layer, in some embodiments, the electrode composite portion 400 which is described herein, provided on a selected surface and then transmit the electrons to an external circuit, or transmit external electrons to the active material layer.

Although the electrode base 100 may have a higher energy density as the thickness t1 of the electrode base 100 decreases in the height direction (i.e., the Y-axis direction in FIG. 1), the electrode base 100 may be formed to have at least a thickness sufficient to ensure the required mechanical strength and conductivity of the support base.

For example, in a case where the electrode base 100 is a positive electrode current collector, the electrode base 100 may be formed from aluminium foil to have a thickness ranging from 10 µm to 20 µm, and in a case where the electrode base 100 is a negative electrode current collector, the electrode base 100 may be formed from copper foil to have a thickness ranging from 8 µm to 15 µm.

The electrode base 100 may be surface-treated to improve the adhesiveness of the active material layer, minimize electrical contact resistance, and prevent corrosion, and may specifically undergo mechanical surface treatment, chemical surface treatment, and/or coating treatment, either sequentially or concurrently.

Referring to FIG. 1 and FIG. 2B, the primer layer 200 is a conductive thin film layer designed to optimize the bonding strength and electrical and mechanical properties of both the electrode base 100 and the electrode composite portion 400, and may be positioned on the central portion of a selected surface (i.e., the top surface in FIG. 1) of the electrode base 100.

The primer layer 200 may be positioned between the electrode base 100 and the electrode composite portion 400, thereby preventing contact resistance, delamination, electrolyte penetration, and the like which would otherwise occur due to direct contact between the electrode composite portion 400, corresponding to the active material layer, and the surface of the electrode base 100.

The primer layer 200 may include a conductive layer containing a carbon material, but is not limited thereto, and various modifications are possible for the primer layer, such as a slurry coating layer containing a carbon material and a binder, which may enhance adhesion without impairing conductivity.

The primer layer 200 may be a thin film layer having a thickness t2 ranging from 0.5 µm to 10 µm that is smaller than the thickness t1 of the electrode base 100 in the height direction of the electrode base 100 (i.e., the Y-axis direction in FIG. 1), but is not limited thereto, and may be modified to various thicknesses considering the electrochemical characteristics of the electrode 10.

The carbon material included in the primer layer 200 has a fibrous structure of fine particles, and the carbon material dispersed in the primer layer 200 may form micro-textures on the surface. Consequently, the micro-textures formed on the surface of the primer layer 200 may strengthen mechanical bonding with the electrode composite portion 400, thereby improving the adhesion between these layers.

The carbon material included in the primer layer 200 may also improve wettability with the electrode composite portion 400 corresponding to the active material layer, in which the improved wettability may enhance particle penetration, thereby improving the interfacial adhesion of the primer layer 200.

Furthermore, the carbon material included in the primer layer 200 is conductive, and the dispersion of the carbon material may enhance electrical conductivity of the primer layer 200, thereby enabling smooth current flow between the electrode base 100 and the electrode composite portion 400 via the primer layer 200 and improving the electrical performance of the electrode 10.

Referring to FIG. 1, FIG. 2B, and FIG. 3A, the thermoplastic coating portions 300 serve as an adhesive layer which facilitates the formation of the insulating coating layer 500, which will be described later, on the electrode base 100, and may be formed on the outer peripheral portions of the selected surface (the top surface in FIG. 1) of the electrode base 100 to closely contact the side peripheral portions of the primer layer 200.

The thermoplastic coating portions 300 may be formed on the selected surface of the electrode base 100 by various methods such as spraying, coating, or lamination, and may be formed with the same thickness as the primer layer 200 to prevent exposure of the side surfaces of the primer layer 200.

The thermoplastic coating portions 300 may be made of an insulating material which may be melted with heat to be adhesive, and in this case, the thermoplastic coating portions 300 may be melted after the electrode composite portion 400 is provided on the primer layer 200.

The thermoplastic coating portions 300 may include polyamide which may be made adhesive with heat, but is not limited thereto, and various alternatives or additions, such as polyimide, polyethylene, and/or polypropylene, are possible.

The thermoplastic coating portions 300 may be melted prior to formation of the insulating coating layer 500, and forming the insulating coating layer 500 on the surface of the molten thermoplastic coating portions 300 may allow the insulating coating layer 500 to be formed more easily and firmly due to the adhesiveness of the thermoplastic coating portions 300.

At this time, the thermoplastic coating portions 300 may be supplied and melted with a light source until the surface temperature of the thermoplastic coating portions 300 reaches a preset melting temperature. However, the disclosure is not limited thereto, and various modifications are possible, such as the thermoplastic coating portions 300 being supplied and melted with a heat source, such as radiant heat.

For example, the thermoplastic coating portions 300 may be melted with a light source supplied by light emission devices 20, which may be laser emission devices which emit a laser beam L as a light source.

The thermoplastic coating portions 300 may also be melted with radiant heat supplied as a heat source by infrared (IR) lamps. Furthermore, the thermoplastic coating portions 300 may be melted with heat directly supplied by a heating roller or a heated steel belt.

The surface temperature of the thermoplastic coating portions 300 may be detected using IR cameras (not shown) during the melting process, and the melting process may be performed until the detected surface temperature of the thermoplastic coating portions 300 reaches a preset melting temperature.

For example, polyamide may have a melting point of approximately 215 °C, and accordingly, the melting temperature of the thermoplastic coating portions 300 made of polyamide may be preset to 215 °C. That is, the thermoplastic coating portions 300 made of polyamide may undergo the melting process until the surface temperature reaches 215 °C.

In other words, during the melting of the thermoplastic coating portions 300 made of polyamide, the surface temperature of the thermoplastic coating portions 300 is detected in real time using IR cameras, and in a case where the detected surface temperature of the thermoplastic coating portions 300 is equal to or higher than the preset melting temperature of 215 °C, the supply of the light source is stopped, and the melting process of the thermoplastic coating portions 300 may be completed.

Accordingly, in the melting of the thermoplastic coating portions 300 using a light source, in a case where the surface temperature of the thermoplastic coating portions 300 reaches a preset melting temperature, the supply of the light source may be immediately cut off, thereby preventing over-melting of the thermoplastic coating portions 300 and improving the quality of the melt.

Each of the laser emission devices may be a diode laser element which emits a laser beam in the near-infrared band with a wavelength of 808 nm to 1074 nm, and the diode laser elements may emit a laser beam in a wavelength band capable of melting the thermoplastic coating portions 300 based on the material of the thermoplastic coating portion.

For example, in the melting of the thermoplastic coating portions 300 made of a polyamide material, the diode laser devices may rapidly and precisely melt the thermoplastic coating portions 300 by locally applying laser beams with a wavelength of 1064 nm, which is capable of melting polyamide, to the thermoplastic coating portions 300.

The thickness t3 of the thermoplastic coating portions 300 may be equal to or less than the thickness t2 of the primer layer 200 in the height direction of the electrode base 100 (i.e., the Y-axis direction in FIG. 1), and as one example, the thickness t3 of the thermoplastic coating portions 300 may be equal to the thickness t2 of the primer layer 200.

Consequently, the thermoplastic coating portions 300 may closely contact the side surfaces of the primer layer 200 and cover the side surfaces of the primer layer 200, and the electrode composite portion 400 may be easily placed on the top surface of the primer layer 200.

The width w3 of the thermoplastic coating portions 300 may be equal to or less than the width w5 of the insulating coating layer 500 in the width direction of the electrode base 100 (i.e., the X-axis direction in FIG. 1), and as one example, the width w3 of the thermoplastic coating portions 300 may be equal to the width w5 of the insulating coating layer 500 which will be provided later.

Consequently, the insulating coating layer 500 formed on the top surfaces of the thermoplastic coating portions 300 may cover the top surfaces of the thermoplastic coating portions 300 and cover the side surfaces of the electrode composite portion 400 by closely contacting the side surfaces of the electrode composite portion 400.

Referring to FIG. 1 and FIG. 2C, the electrode composite portion 400 is a layer in which electrochemical reactions substantially occur in the electrode 10, and may be provided on a selected surface (i.e., the top surface in FIG. 1) of the primer layer 200.

The electrode composite portion 400 may be formed from a dry electrode film, which may be manufactured by combining an active material, a binder, and a conductive agent in powder forms without a solvent, then shaping the resulting mixture into a film.

The electrode composite portion 400 may be formed by providing a dry electrode film on the selected surface (i.e., the top surface in FIG. 1) of the primer layer 200 using various methods, such as lamination, adhesive bonding using heat and pressure, plasma bonding, ultrasonic bonding, laser annealing bonding, and/or ultraviolet (UV) radiation curing adhesion.

In some embodiments, the dry electrode film may include a surfactant in addition to the active material, the binder, and the conductive material to enhance interfacial bonding strength with the primer layer 200, thereby being provided more accurately and firmly on the surface of the primer layer 200.

Referring to FIG. 1 and FIG. 3B, the insulating coating layer 500 is configured to enhance the electrical characteristics, reliability, and durability of the electrode 10 by providing insulation, protection, and stability to the electrode composite portion 400, and may be provided on the thermoplastic coating portions 300 while closely contacting the side surfaces of the electrode composite portion 400.

The insulating coating layer 500 may be provided on the selected surfaces (i.e., the top surfaces in FIG. 1) of the molten thermoplastic coating portions 300, and may be formed more accurately and firmly on the thermoplastic coating portions 300 due to the improved adhesiveness of the molten thermoplastic coating portions 300.

In some embodiments, the insulating coating layer 500 may be firmly formed on the selected surfaces of the thermoplastic coating portions 300 to be in close contact with the side surfaces of the electrode composite portion 400 by applying insulating powder P to the molten thermoplastic coating portions 300, melting the applied insulating powder P, and then allowing the molten insulating powder P to cure naturally.

At this time, the insulating powder P may include a thermosetting polymer, such as polyimide, which has excellent heat resistance, chemical resistance, and mechanical strength, but is not limited thereto, and various modifications are possible, such as a phenolic resin, which has excellent insulation and stability.

The insulating powder P of the insulating coating layer 500 may be sprayed and applied to the molten thermoplastic coating portions 300 by any of spray nozzle spraying, dispenser spraying, and/or electrostatic spraying.

In some embodiments, the spray nozzle spraying includes positioning the spray devices 30 above the molten thermoplastic coating portions 300 and applying the insulating powder P as a fine mist to the thermoplastic coating portions 300 by the spray devices 30 using high-pressure air or gas.

In some embodiments, the insulating powder P may be applied to the selected surfaces (i.e., the top surfaces in FIG. 1) of the thermoplastic coating portions 300 at a thickness of 3 µm to 20 µm, and the application thickness, uniformity, and the like of the insulating powder P may be controlled by adjusting spray conditions, such as the spray pressure, spray time, and/or spray flow rate, of the spray devices 30.

In other words, once the thickness and shape of the insulating coating layer 500 formed on the selected surfaces of the thermoplastic coating portions 300 are set, the insulating powder P may be applied to the thermoplastic coating portions 300 by adjusting the spraying conditions of the spray devices 30 depending on the set thickness of the insulating coating layer 500.

The dispenser spraying includes positioning dispensers (not shown) above the molten thermoplastic coating portions 300, in place of the spray devices 30, and applying insulating powder to the molten thermoplastic coating portions 300 by discharging the insulating powder using a mechanical piston or an electronic valve.

In some embodiments, the insulating powder may be discharged to the selected surfaces (i.e., the top surfaces in FIG. 1) of the thermoplastic coating portions 300 in a controlled manner by adjusting the discharge conditions, such as a discharge amount and a discharge time, of the dispensers so that the insulating powder has a required thickness.

The electrostatic spraying includes charging insulating powder particles and adsorbing and applying the charged insulating powder particles to the selected surfaces (i.e., the top surfaces in FIG. 1) of the molten thermoplastic coating portions 300 using an electric field.

In some embodiments, the insulating powder may be adsorbed to the selected surfaces of the thermoplastic coating portions 300 in a controlled manner by adjusting the powder supply amount, spraying time, charge amount, position, velocity, and the like of the electrostatic spray devices, so that the insulating powder has a required thickness.

Referring to FIG. 3B and FIG. 4, the spray devices 30 spray the insulating powder P in a direction perpendicular to the selected surfaces (i.e., the top surfaces in FIG. 3B) of the thermoplastic coating portions 300 adjacent to the side surfaces of the electrode composite portion 400, and thus the sprayed insulating powder P may be sprayed and applied to the top edges of the electrode composite portion 400.

At this time, the insulating powder P applied to the top edges of the electrode composite portion 400 may act as protrusions to increase the thickness of the electrode composite portion 400 and, during the subsequent rolling process, may act as protrusions which cause the electrode 10 to fracture.

To prevent such problems, the insulating powder P may be sprayed and applied to the selected surfaces (i.e., the top surfaces in FIG. 1) of the thermoplastic coating portions 300 at an angle relative to the selected surfaces.

In some embodiments, as the spray devices 30 are disposed at a selected angle α relative to the selected surfaces of the thermoplastic coating portions 300, the insulating powder P may be sprayed and applied to the selected surfaces of the thermoplastic coating portions 300 at an incline relative to that surface.

As a result, the insulating powder P sprayed by the spray devices 30 may be precisely sprayed and applied to the lower portions of the thermoplastic coating portions 300 and the side surfaces of the electrode composite portion 400, thereby preventing the insulating powder P from being sprayed and applied to the top edges of the electrode composite portion 400.

In some embodiments, the selected angle α formed between the spray devices 30 and the selected surfaces of the thermoplastic coating portions 300 may be adjusted considering the size of the thermoplastic coating portions 300, the height of the side surfaces of the electrode composite portion 400, the distances from the spray devices 30 to the electrode, and the like, and may form an angle between 30 and 60 degrees, for example.

Referring to FIG. 3B and FIG. 3C, the insulating powder P applied to the selected surfaces (i.e., the top surfaces in FIG. 3B) of the thermoplastic coating portions 300 may be melted and self-cure after being applied, thereby forming the insulating coating layer 500.

In some embodiments, the insulating powder P may be supplied and melted with a light source, but is not limited thereto, and various modifications are possible, such as the insulating powder P being supplied and melted with a heat source, such as radiant heat.

For example, the insulating powder P may be melted with a light source supplied by the light emission devices 20, which may be laser emission devices to emit a laser beam L as the light source.

The insulating powder P may be melted with radiant heat as a heat source supplied by IR lamps. The insulating powder P may also be melted with heat supplied directly by a heating roller, a heated steel belt, or the like.

The surface temperature of the insulating powder P may be detected using an IR camera (not shown) during the melting process, which may be performed until the detected surface temperature of the insulating powder P reaches the preset melting temperature.

For example, assuming the melting point of polyimide is approximately 360 °C, the melting temperature of the insulating powder P made of polyimide may be preset to 360 °C. That is, the melting process of the insulating powder P made of polyimide may be performed until the surface temperature of the insulating powder P reaches 360 °C.

In other words, during the melting of the insulating powder P made of polyimide, the surface temperature of the insulating powder P is detected in real time using an IR camera, and in a case where the detected surface temperature of the insulating powder P reaches or exceeds the preset melting temperature of 360 °C, the supply of the light source is stopped, and the melting process may be completed.

Accordingly, during the melting of the insulating powder P using a light source, the surface temperature of the insulating powder P is detected in real time, and in a case where the surface temperature reaches a preset melting temperature, the supply of the light source may be immediately cut off, thereby preventing the insulating powder P from being over-melted and improving the quality of the insulating coating layer 500.

Each of the laser emission devices may be a diode laser element configured to emit a laser beam in the blue-violet and blue band, specifically with wavelengths of 375 nm to 450 nm, and the diode laser elements may emit a laser beam in a wavelength band capable of melting the insulating powder P depending on the material of the insulating powder.

For example, during the melting of the insulating powder P made of polyimide material, the diode laser element may locally supply a laser beam with a wavelength of 405 nm, which is capable of melting polyimide, to the insulating powder P, thereby rapidly and precisely melting the insulating powder P.

Referring to FIG. 5, the insulating coating layer 500 may be formed on portions of the side surfaces of the electrode composite portion 400 and on the thermoplastic coating portions 300 by melting the insulating powder P applied to the selected surfaces (i.e., the top surfaces in FIG. 5) of the thermoplastic coating portions 300 and allowing the molten insulating powder P to cure naturally.

At this time, the insulating powder may remain on the surface of the insulating coating layer 500 and on the electrode composite portion 400 adjacent to the insulating coating layer 500, and the residual powder may be removed by compressed air blowing.

In some embodiments, in a case where the insulating powder applied to portions of the side surfaces of the electrode composite portion 400 and to the selected surfaces (i.e., the top surfaces in FIG. 5) of the thermoplastic coating portions 300 are cured to form the insulating coating layer 500, the residual powder may be removed by spraying compressed air A toward the insulating coating layer 500 using air spray devices 40.

In some embodiments, the air spray devices 40 may be disposed at a selected angle β relative to the selected surfaces of the thermoplastic coating portions 300, and the compressed air A may be sprayed toward the insulating coating layer 500 at the selected angle β relative to the selected surfaces of the thermoplastic coating portions 300.

In some embodiments, the selected angle β formed between the air spray devices 40 and the selected surfaces of the thermoplastic coating portions 300 may be adjusted considering the size of the thermoplastic coating portions 300, the heights of the side surfaces of the electrode composite portion 400, and the like, and may form an angle, for example, between 30 to 60 degrees.

Consequently, the compressed air A discharged by the air spray devices 40 is sprayed at an angle toward the insulating coating layer 500, and thus may be sprayed over a wider area to both the insulating coating layer 500 and the electrode composite portion 400, thereby improving the powder removal efficiency.

The air spray devices 40 may be disposed by adjusting the vertical distances h from the selected surface (i.e., the top surface in FIG. 5) of the electrode base 100 and the horizontal distances d from the side surfaces of the electrode composite portion 400, in addition to the selected angle β formed with the selected surfaces of the thermoplastic coating portions 300, thereby optimizing the removal efficiency of residual powder.

Referring to FIG. 3B, because the spray devices 30 may spray the insulating powder P in a direction perpendicular to the selected surfaces (i.e., the top surfaces in FIG. 3B) of the thermoplastic coating portions 300 adjacent to the side surfaces of the composite portion 400 as described herein, the sprayed insulating powder P may be sprayed and applied to the top edges of the electrode composite portion 400.

In some embodiments, the insulating powder P applied to the top edges of the electrode composite portion 400 may act as protrusions, thereby increasing the thickness of the electrode composite portion 400, and during the subsequent rolling process, these protrusions may cause the electrode 10 to fracture.

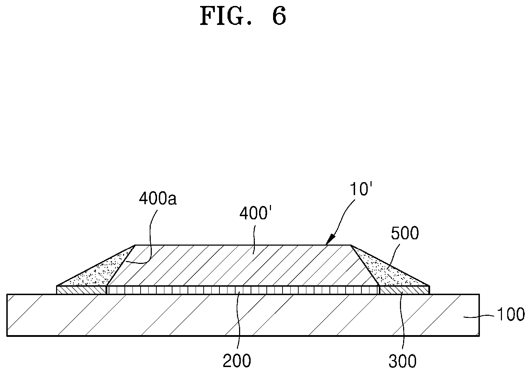

Referring to (b) of FIG. 3 and FIG. 6, in another embodiment for preventing the problems described herein, the electrode composite portion 400' may be formed such that side surfaces 400a are inclined relative to the selected surface (i.e., the top surface in FIG. 6) of the primer layer 200.

In some embodiments, the electrode composite portion 400' of this embodiment is formed such that the cross-sectional area decreases from the bottom surface toward the top surface, so that the side surfaces of the electrode composite portion 400' may be inclined inward toward the center of the selected surface of the primer layer 200.

Consequently, the spray devices 30 may be spaced further apart from the top edges of the electrode composite portion 400' even in the case that the spray devices are positioned at the same height above the thermoplastic coating portions 300. Therefore, the insulating powder sprayed by the spray device 30 may be sprayed to the thermoplastic coating portions 300 without interference with the top edges of the electrode composite portion 400'.

Even in the case that the insulating powder sprayed by the spray devices 30 is sprayed to the side surfaces of the electrode composite portion 400' adjacent to the selected surfaces of the thermoplastic coating portions 300, the sprayed insulating powder may flow down along the inclined side surfaces of the electrode composite portion 400' and enter the thermoplastic coating portions 300.

Therefore, preventing the insulating powder P sprayed by the spray devices 30 from being sprayed to the top edges of the electrode composite portion 400' may effectively prevent an increase in the thickness of the electrode 10' and the fracture of the electrode 10' during the rolling process.

Hereinafter, a method of fabricating an electrode according to embodiments of the disclosure will be described.

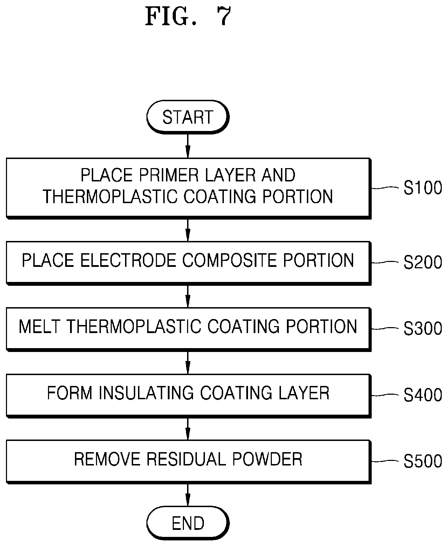

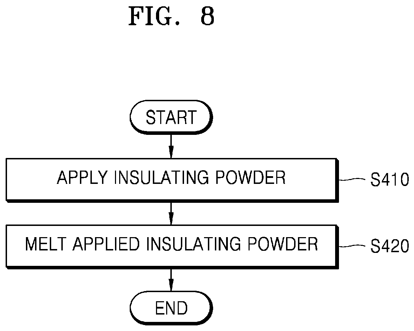

FIG. 7 is a flowchart illustrating a method of fabricating an electrode according to embodiments of the disclosure. FIG. 8 is a flowchart illustrating the method of forming the insulating coating layer shown in FIG. 7.

Referring to FIG. 7, the method of fabricating an electrode according to embodiments of the disclosure includes an operation S100 of forming a primer layer 200 and thermoplastic coating portions 300; an operation S200 of providing an electrode composite portion 400, an operation S300 of melting the thermoplastic coating portions 300, an operation S400 of forming an insulating coating layer 500, and may further include an operation S500 of removing residual powder.

Referring to FIG. 2A, prior to performing the operation S100 of forming the primer layer 200 and the thermoplastic coating portions 300, an electrode base 100 for forming the primer layer 200 and the thermoplastic coating portions 300 may be prepared.

The electrode base 100 may be a current collector serving as an electrode substrate, and provide a support base for an active layer to collect current and transmit and distribute the current to an external circuit.

For example, the electrode base 100 may collect electrons generated in an active material layer provided on a selected surface, in some embodiments, the electrode composite portion 400 described herein, and transmit the collected electrons to an external circuit, or transmit external electrons to an active material layer.

The electrode base 100 may have higher energy density with lower thickness, but may be formed with a thickness equal to or greater than a suitable thickness to ensure mechanical strength and conductivity required for the support base.

For example, in a case where the electrode base 100 is a positive electrode current collector, the electrode base may be formed from aluminium foil with a thickness of 10 µm to 20 µm, and in a case where the electrode base 100 is a negative electrode current collector, the electrode base may be formed from copper foil with a thickness of 8 µm to 15 µm.

The electrode base 100 may be surface-treated to increase the adhesiveness of the active material layer and minimize electrical contact resistance to prevent corrosion and the like, and in some embodiments, mechanical surface treatment, chemical surface treatment, and/or coating treatment may be performed sequentially or in parallel.

Referring to FIG. 2B, the operation S100 of forming the primer layer 200 and the thermoplastic coating portions 300 may form the thermoplastic coating portions 300 after forming the primer layer 200.

First, the primer layer 200 is a conductive thin film layer for optimizing the bonding strength and the electrical and mechanical properties between the electrode base 100 and the electrode composite portion 400, and may be placed on the central portion of the selected surface (i.e., the top surface in FIG. 2B) of the electrode base 100.

The primer layer 200 may be positioned between the electrode base 100 and the electrode composite portions 400, and thus prevent contact resistance, delamination, electrolyte penetration, and the like which would occur through direct contact of the electrode composite portion 400, which corresponds to the active material layer, with the surface of the electrode base 100.

The primer layer 200 may include a conductive layer containing carbon material, but is not limited thereto, and various modifications are possible for the primer layer, such as a slurry coating layer containing a carbon material and a binder, which may enhance adhesion without impairing conductivity.

The primer layer 200 may be a thin film layer with a thickness of 0.5 µm to 10 µm, which is smaller than the thickness of the electrode base 100, but is not limited thereto, and considering the electrochemical characteristics of the electrode 10, modifications to various thicknesses are possible.

The carbon material included in the primer layer 200 has a fibrous structure of fine particles and may form fine textures on the surface in a case where the carbon material is dispersed in the primer layer 200. Consequently, the fine textures formed on the surface of the primer layer 200 may enhance adhesion by strengthening the mechanical bonding with the electrode composite portion 400.

The carbon material included in the primer layer 200 may improve wettability with the electrode composite portion 400, which corresponds to the active material layer, to increase the penetration of particles, thereby improving the interfacial adhesion of the primer layer 200.

Because the carbon material included in the primer layer 200 is conductive, the electrical conductivity of the primer layer 200 may be improved due to the dispersion of the carbon material, and consequently, current flow between the electrode base 100 and the electrode composite portion 400 may be smoothed via the primer layer 200, thereby improving the electrical performance of the electrode 10.

Thereafter, the thermoplastic coating portions 300 may be formed on the electrode base 100 to closely contact the side surfaces of the primer layer 200.

Referring to FIG. 2B and FIG. 3A, the thermoplastic coating portions 300 serve as an adhesive layer which facilitates the formation of the insulating coating layer 500, which will be described later, on the electrode base 100, and may be formed on the outer peripheral portions of the selected surface (i.e., the top surface in FIG. 2B) of the electrode base 100 to closely contact the side peripheral portions of the primer layer 200.

The thermoplastic coating portions 300 may be formed on the selected surface of the electrode base 100 by various methods such as spraying, coating, and/or lamination, and may be formed with the same thickness as the primer layer 200 to prevent exposure of the side surfaces of the primer layer 200.

The thermoplastic coating portions 300 may be made of an insulating material capable of melting with heat to be adhesive, and in this case, the thermoplastic coating portions 300 may be melted after the electrode composite portion 400 is provided on the primer layer 200. The melting process of the thermoplastic coating portions 300 is described herein.

The thermoplastic coating portions 300 may include polyamide which may be made adhesive with heat, but is not limited thereto, and various alternatives or additions, such as polyimide, polyethylene, and polypropylene, are possible.

Referring to FIG. 2C, the operation S200 of providing the electrode composite portion 400 may include forming the electrode composite portion 400 on the selected surface (i.e., the top surface in FIG. 2C) of the primer layer 200 as a layer in which electrochemical reactions substantially occur.

The electrode composite portion 400 may be formed from a dry electrode film, which may be manufactured by combining active material, a binder, and a conductive agent in powder forms without a solvent, then shaping the resulting mixture into a film.

The electrode composite portion 400 may be formed by providing a dry electrode film on the selected surface (i.e., the top surface in FIG. 1) of the primer layer 200 using various methods, such as lamination, adhesive bonding using heat and pressure, plasma bonding, ultrasonic bonding, laser annealing bonding, and UV radiation curing adhesion.

In some embodiments, the dry electrode film may include a surfactant in addition to the active material, the binder, and the conductive material to enhance interfacial bonding strength with the primer layer 200, thereby being provided more accurately and firmly on the surface of the primer layer 200.

Referring to FIG. 3C and FIG. 4, the operation S300 of melting the thermoplastic coating portions 300 may apply heat to the thermoplastic coating portions 300 to melt, thereby enabling the thermoplastic coating portions 300 to be adhesive.

In some embodiments, the thermoplastic coating portions 300 may be melted prior to formation of the insulating coating layer 500, and forming the insulating coating layer 500 on the surfaces of the molten thermoplastic coating portions 300 may allow the insulating coating layer 500 to be formed more easily and firmly due to the adhesiveness of the thermoplastic coating portions 300.

At this time, the thermoplastic coating portions 300 may be supplied and melted with a light source until the surface temperature of the thermoplastic coating portions 300 reaches a preset melting temperature. However, the disclosure is not limited thereto, and various modifications are possible, such as the thermoplastic coating portions 300 being supplied and melted with a heat source, such as radiant heat.

For example, the thermoplastic coating portions 300 may be melted with a light source supplied by light emission devices 20, which may be laser emission devices which emit a laser beam L as a light source.

The thermoplastic coating portions 300 may also be melted with radiant heat supplied as a heat source by IR lamps. Furthermore, the thermoplastic coating portions 300 may be melted with heat directly supplied by a heating roller or a heated steel belt.

The surface temperature of the thermoplastic coating portions 300 may be detected using IR cameras (not shown) during the melting process, and the melting process may be performed until the detected surface temperature of the thermoplastic coating portions 300 reaches a preset melting temperature.

For example, polyamide may have a melting point of approximately 215 °C, and accordingly, the melting temperature of the thermoplastic coating portions 300 made of polyamide may be preset to 215 °C. That is, the thermoplastic coating portions 300 made of polyamide may undergo the melting process until the surface temperature reaches 215 °C.

In other words, during the melting of the thermoplastic coating portions 300 made of polyamide, the surface temperature of the thermoplastic coating portions 300 is detected in real time using IR cameras, and in a case where the detected surface temperature of the thermoplastic coating portions 300 is equal to or higher than the preset melting temperature of 215 °C, the supply of the light source is stopped, and the melting process of the thermoplastic coating portions 300 may be completed.

Accordingly, in the melting of the thermoplastic coating portions 300 using a light source, in a case where the surface temperature of the thermoplastic coating portions 300 reaches a preset melting temperature, the supply of the light source may be immediately cut off, thereby preventing over-melting of the thermoplastic coating portions 300 and improving the quality of the melt.

Each of the laser emission devices may be a diode laser element which emits a laser beam in the near-infrared band with a wavelength of 808 nm to 1074 nm, and the diode laser elements may emit a laser beam in a wavelength band capable of melting the thermoplastic coating portions 300 depending on the material of the thermoplastic coating portion.

For example, in the melting of the thermoplastic coating portions 300 made of a polyamide material, the diode laser devices may rapidly and precisely melt the thermoplastic coating portions 300 by locally applying laser beams with a wavelength of 1064 nm, which is capable of melting polyamide, to the thermoplastic coating portions 300.

Referring to FIG. 8, the operation S400 of forming the insulating coating layer 500 may include an operation S410 of applying insulating powder P and an operation S420 of melting the applied insulating powder P.

Referring to FIG. 3B, the insulating coating layer 500 is configured to enhance the electrical characteristics, reliability, and durability of the electrode 10 by providing insulation, protection, and stability to the electrode composite portion 400, and may be provided on the thermoplastic coating portions 300 while closely contacting the side surfaces of the electrode composite portion 400.

The insulating coating layer 500 may be provided on selected surfaces (i.e., the top surfaces in FIG. 1) of the molten thermoplastic coating portions 300, and may be formed more accurately and firmly on the thermoplastic coating portions 300 due to the adhesiveness of the molten thermoplastic coating portions 300.

In some embodiments, the insulating coating layer 500 may be firmly formed on the selected surfaces of the thermoplastic coating portions 300 to be in close contact with the side surfaces of the electrode composite portion 400 by applying the insulating powder P to the molten thermoplastic coating portions 300, melting the applied insulating powder P, and then allowing the molten insulating powder P to cure naturally.

In some embodiments, the insulating powder P may include a thermosetting polymer, such as polyimide, which has excellent heat resistance, chemical resistance, and mechanical strength, but is not limited thereto, and various modifications are possible, such as a phenolic resin, which has excellent insulation and stability.

The insulating powder P of the insulating coating layer 500 may be sprayed and applied to the molten thermoplastic coating portions 300 using any of spray nozzle spraying, dispenser spraying, and/or electrostatic spraying.

In some embodiments, the spray nozzle spraying includes positioning the spray devices 30 above the molten thermoplastic coating portions 300 and applying the insulating powder P as a fine mist to the thermoplastic coating portions 300 by the spray devices 30 using high-pressure air or gas.

In some embodiments, the insulating powder P may be applied to the selected surfaces (i.e., the top surfaces in FIG. 1) of the thermoplastic coating portions 300 at a thickness of 3 µm to 20 µm, and the application thickness, uniformity, and the like of the insulating powder P may be controlled by adjusting spray conditions, such as the spray pressure, spray time, and/or spray flow rate, of the spray devices 30.

In other words, once the thickness and shape of the insulating coating layer 500 formed on the selected surfaces of the thermoplastic coating portions 300 are set, the insulating powder P may be applied to the thermoplastic coating portions 300 by adjusting the spraying conditions of the spray devices 30 depending on the set thickness of the insulating coating layer 500.

The dispenser spraying includes positioning dispensers (not shown) above the molten thermoplastic coating portions 300, in place of the spray devices 30, and applying insulating powder to the molten thermoplastic coating portions 300 by discharging the insulating powder using a mechanical piston or an electronic valve.

In some embodiments, the insulating powder may be discharged to the selected surfaces (i.e., the top surfaces in FIG. 1) of the thermoplastic coating portions 300 in a controlled manner by adjusting the discharge conditions, such as a discharge amount and a discharge time, of the dispensers so that the insulating powder has a required thickness.

The electrostatic spraying includes charging insulating powder particles and adsorbing and applying the charged insulating powder particles to the selected surfaces (i.e., the top surfaces in FIG. 1) of the molten thermoplastic coating portions 300 using an electric field.

In some embodiments, the insulating powder may be adsorbed to the selected surfaces of the thermoplastic coating portions 300 in a controlled manner by adjusting the powder supply amount, spraying time, charge amount, position, velocity, and the like of the electrostatic spray devices, so that the insulating powder has a required thickness.

Referring to FIG. 3B and FIG. 4, the spray devices 30 spray the insulating powder P in a direction perpendicular to the selected surfaces (i.e., the top surfaces in FIG. 3B) of the thermoplastic coating portions 300 adjacent to the side surfaces of the electrode composite portion 400, and thus the sprayed insulating powder P may be sprayed and applied to the top edges of the electrode composite portion 400.

At this time, the insulating powder P applied to the top edges of the electrode composite portion 400 may act as protrusions to increase the thickness of the electrode composite portion 400 and, during the subsequent rolling process, may act as protrusions which cause the electrode 10 to fracture.

To prevent such problems, the insulating powder P may be sprayed and applied to the selected surfaces (i.e., the top surfaces in FIG. 1) of the thermoplastic coating portions 300 at an angle relative to the selected surfaces.

In some embodiments, as the spray devices 30 are disposed at a selected angle α relative to the selected surfaces of the thermoplastic coating portions 300, the insulating powder P may be sprayed and applied to the selected surfaces of the thermoplastic coating portions 300 at an incline relative to that surface.

As a result, the insulating powder P sprayed by the spray devices 30 may be precisely sprayed and applied to the lower portions of the thermoplastic coating portions 300 and the side surfaces of the electrode composite portion 400, thereby preventing the insulating powder P from being sprayed and applied to the top edges of the electrode composite portion 400.

In some embodiments, the selected angle α formed between the spray devices 30 and the selected surfaces of the thermoplastic coating portions 300 may be adjusted considering the size of the thermoplastic coating portions 300, the height of the side surfaces of the electrode composite portion 400, the distances from the spray devices 30 to the electrode, and the like, and may form an angle between 30 and 60 degrees, for example.

Referring to FIG. 3B and FIG. 3C, the insulating powder P applied to the selected surfaces (i.e., the top surfaces in FIG. 3B) of the thermoplastic coating portions 300 may be melted and self-cure after being applied, thereby forming the insulating coating layer 500.

In some embodiments, the insulating powder P may be supplied and melted with a light source, but is not limited thereto, and various modifications are possible, such as the insulating powder P being supplied and melted with a heat source, such as radiant heat.

For example, the insulating powder P may be melted with a light source supplied by the light emission devices 20, which may be laser emission devices to emit a laser beam L as the light source.

The insulating powder P may be melted with radiant heat as a heat source supplied by IR lamps. The insulating powder P may also be melted with heat supplied directly by a heating roller, a heated steel belt, or the like.

The surface temperature of the insulating powder P may be detected using an IR camera (not shown) during the melting process, which may be performed until the detected surface temperature of the insulating powder P reaches the preset melting temperature.

For example, assuming the melting point of polyimide is approximately 360 °C, the melting temperature of the insulating powder P made of polyimide may be preset to 360 °C. That is, the melting process of the insulating powder P made of polyimide may be performed until the surface temperature of the insulating powder P reaches 360 °C.

In other words, during the melting of the insulating powder P made of polyimide, the surface temperature of the insulating powder P is detected in real time using an IR camera, and in a case where the detected surface temperature of the insulating powder P reaches or exceeds the preset melting temperature of 360 °C, the supply of the light source is stopped, and the melting process may be completed.

Accordingly, during the melting of the insulating powder P using a light source, the surface temperature of the insulating powder P is detected in real time, and in a case where the surface temperature reaches a preset melting temperature, the supply of the light source may be immediately cut off, thereby preventing the insulating powder P from being over-melted and improving the quality of the insulating coating layer 500.

Each of the laser emission devices may be a diode laser element to emit a laser beam in the blue-violet and blue band, specifically with wavelengths of 375 nm to 450 nm, and the diode laser elements may emit a laser beam in a wavelength band capable of melting the insulating powder P depending on the material of the insulating powder.

For example, during the melting of the insulating powder P made of polyimide material, the diode laser elements may locally supply a laser beam with a wavelength of 405 nm, which is capable of melting polyimide, to the insulating powder P, thereby rapidly and precisely melting the insulating powder P.

The insulating coating layer 500 may be formed on portions of the side surfaces of the electrode composite portion 400 and on the thermoplastic coating portions 300 by melting the insulating powder P applied to the selected surfaces (i.e., the top surfaces in FIG. 5) of the thermoplastic coating portions 300 and allowing the molten insulating powder P to cure naturally.

Referring to FIG. 5, the operation S500 of removing residual powder is an operation of removing powder which may remain on the insulating coating layer 500 and the electrode composite portion 400 by compressed air blowing.

In some embodiments, in a case where the insulating powder applied to portions of the side surfaces of the electrode composite portion 400 and to the selected surfaces (i.e., the top surfaces in FIG. 5) of the thermoplastic coating portions 300 are cured to form the insulating coating layer 500, the residual powder may be removed by spraying compressed air A toward the insulating coating layer 500 using the air spray devices 40.

In some embodiments, the air spray devices 40 may be disposed at a selected angle β relative to the selected surfaces of the thermoplastic coating portions 300, and the compressed air A may be sprayed toward the insulating coating layer 500 at the selected angle β relative to the selected surfaces of the thermoplastic coating portions 300.

In some embodiments, the selected angle β formed between the air spray devices 40 and the selected surfaces of the thermoplastic coating portions 300 may be adjusted considering the size of the thermoplastic coating portions 300, the heights of the side surfaces of the electrode composite portion 400, and the like, and may form an angle, for example, between 30 to 60 degrees.

Consequently, the compressed air A discharged by the air spray devices 40 is sprayed at an angle toward the insulating coating layer 500, and thus may be sprayed over a wider area to both the insulating coating layer 500 and the electrode composite portion 400, thereby improving the powder removal efficiency.

The air spray devices 40 may be disposed by adjusting the vertical distances h from the selected surface (i.e., the top surface in FIG. 5) of the electrode base 100 and the horizontal distances d from the side surfaces of the electrode composite portion 400, in addition to the selected angle β formed with the selected surfaces of the thermoplastic coating portions 300, thereby optimizing the removal efficiency of residual powder.

The method of fabricating an electrode according to embodiments of the disclosure has disclosed a method of removing residual powder by spraying compressed air, but is not limited thereto, and various modifications such as vacuum suction are possible.

For example, instead of the air spray devices 40, a vacuum suction device (not shown) may be provided to remove residual powder remaining on the insulating coating layer 500 and the electrode composite portion 400 by vacuum suction.

The electrode 10 according to embodiments of the disclosure may melt the thermoplastic coating portions 300 before forming the insulating coating layer 500 and then form the insulating coating layer 500 on the surfaces of the melted thermoplastic coating portions 300, thereby enabling the insulating coating layer 500 to be formed more easily and firmly through the adhesiveness of the thermoplastic coating portions 300.

Furthermore, preventing the insulating powder P from being applied to the top surface of the electrode composite portion 400 during the formation of the insulating coating layer 500 may prevent an increase in the thickness of the electrode 10 and the fracture of the electrode 10 during the rolling process.

The electrode fabrication method and the electrode fabricated thereby according to embodiments of the disclosure may prevent the application of the insulating material on the top surface of the electrode composite portion during the formation of the insulating coating layer, thereby preventing an increase in the thickness of the electrode and the fracture of the electrode during the rolling process.

The scope of the disclosure should not be limited to the embodiments described herein, and it should be understood that the scope of the disclosure encompasses not only the appended claims but also all equivalents and all equivalent modifications thereof.

Although the disclosure has been described with reference to the specific embodiments and accompanying drawings, the disclosure is not limited thereby, and it should be understood that various modifications and variations may be made by a person having ordinary knowledge in the art to which the disclosure pertains without departing from the technical idea of the disclosure and the scope of the appended claims and their equivalents.

## Claims

1. An electrode comprising:
an electrode base;
a primer layer provided on a surface of the electrode base;
a thermoplastic coating portion provided on a side surface of the primer layer and positioned on the surface of the electrode base;
an electrode composite portion provided on a surface of the primer layer;
an insulating coating layer provided on a side surface of the electrode composite portion and provided on a surface of the thermoplastic coating portion.

2. The electrode of claim 1,
wherein a width of the thermoplastic coating portion in a width direction of the electrode base is equal to or less than a width of the insulating coating layer in the width direction of the electrode base.

3. The electrode of claim 2,
wherein a thickness of the thermoplastic coating portion in a height direction of the electrode base is equal to or less than a thickness of the primer layer in the height direction of the electrode base.

4. The electrode of any one of claims 1 to 3,
wherein the thermoplastic coating portion comprises one of polyamide, polyimide, and/or polyethylene.

5. The electrode of any one of claims 1 to 4,
wherein the electrode composite portion comprises a dry electrode film laminated on the surface of the primer layer.

6. The electrode of any one of claims 1 to 5,
wherein the side surface of the electrode composite portion is inclined relative to the surface of the primer layer.

7. The electrode of any one of claims 1 to 6,
wherein the insulating coating layer is formed by melting the thermoplastic coating portion, applying insulating powder to the molten thermoplastic coating portion and melting the applied insulating powder.

8. The electrode of claim 7,
wherein the insulating powder is sprayed and applied to the molten thermoplastic coating portion by one of spray nozzle spraying, dispenser spraying, and/or electrostatic spraying.

9. The electrode of claim 8,
wherein the insulating powder is sprayed in a direction inclined relative to the surface of the thermoplastic coating portion.

10. The electrode of any one of claims 1 to 9,
wherein the primer layer comprises a conductive layer comprising a carbon material.

11. A method of fabricating an electrode, the method comprising:
providing a primer layer and a thermoplastic coating portion on an electrode base;
providing an electrode composite portion on the primer layer;
melting the thermoplastic coating portion; and
forming an insulating coating layer on the molten thermoplastic coating portion.

12. The method of claim 11,
wherein a side surface of the electrode composite portion is inclined relative to a surface of the primer layer.

13. The method of claim 11 or claim 12,
wherein the forming of the insulating coating layer comprises:
applying an insulating powder to the molten thermoplastic coating portion; and
melting the applied insulating powder.

14. The method of claim 13,
wherein spraying the insulating powder comprises spraying the insulating powder in a direction inclined relative to a surface of the molten thermoplastic coating portion.

15. The method of any one of claims 11 to 14,
wherein the forming of the insulating coating layer comprises removing residual powder from the insulating coating layer.
